# FASCICULE DE BREVET EUROPEEN

(11) **EP 4 451 117 B1**
(45) Date de publication et mention de la délivrance du brevet: **05.11.2025**
(21) Numéro de dépôt: 24171223.1
(22) Date de dépôt: 19.04.2024
(51) Int. Cl.: G06F 9/4401, G06F 21/57

(54) **PLATEFORME INFORMATIQUE AVEC FICHIER DE CONFIGURATION ADDITIONNEL, SYSTÈME ÉLECTRONIQUE AVIONIQUE ASSOCIÉ**
COMPUTERPLATTFORM MIT ZUSÄTZLICHER KONFIGURATIONSDATEI, ELEKTRONISCHES AVIONIKSYSTEM DAFÜR
COMPUTING PLATFORM WITH ADDITIONAL CONFIGURATION FILE, ASSOCIATED AVIONICS ELECTRONIC SYSTEM

(30) Priorité: 20.04.2023 FR 2303958
(43) Date de publication de la demande: 23.10.2024
(73) Titulaire: Thales, 92190 Meudon (FR)
(72) Inventeur: LEONARDI, Nicolas, 33701 MERIGNAC (FR); LAMOUR, Pierrick, 33701 MERIGNAC (FR)
(74) Mandataire: Lavoix

(56) Documents cités:
- US-A1- 2011 296 151
- US-A1- 2013 159 477

## Description

La présente invention concerne une plateforme informatique apte à exécuter un ensemble de partition(s) applicative(s), chacune incluant une application logicielle avionique, comportant des ressources et hébergeant un système d'exploitation.

L'invention concerne également un système électronique avionique destiné à être embarqué à bord d'un aéronef, le système avionique comprenant une telle plateforme informatique.

L'invention concerne le domaine de la configuration d'applications logicielles, en particulier avioniques, chargeables sur une plateforme informatique comprenant des ressources, dont un processeur et au moins une mémoire.

De telles applications logicielles, également appelées parties logicielles chargeables ou LSP (de l'anglais *Loadable Software Parts*), sont généralement configurables :
- soit lors de la conception (de l'anglais *at design time*), en y intégrant lors de leur génération des valeurs de configuration adaptées au contexte d'exécution de l'application logicielle respective ;
- soit lors de l'exécution (de l'anglais *at run time*), en allant chercher cette configuration dans une zone mémoire logicielle ou matérielle prévue à cet effet. Il est alors nécessaire de programmer au préalable lesdites zones mémoires avec les paramètres de configuration adéquats.

De telles applications logicielles avioniques chargeables sont typiquement conformes à la norme ARINC 665, également notée A665, dans sa version A665-3 du 12/08/2005 et versions suivantes.

US 2013/0159477 A1 concerne un procédé de configuration d'opérations synchrones pilotées par table d'un système de commande avionique distribué comprenant une pluralité de nœuds de traitement interconnectés dans un réseau.

Dans le cas d'applications logicielles configurables lors de la conception, on connait une plateforme informatique apte à exécuter l'ensemble de partition(s) applicative(s), la plateforme comportant des ressources dont des ressources matérielles et hébergeant un système d'exploitation, les ressources matérielles incluant un processeur, une mémoire vive et une mémoire de stockage. La plateforme informatique comporte également, dans la mémoire de stockage, un paquet d'amorçage incluant un noyau, au moins un pilote de ressources, un ensemble de partition(s) système et une table de configuration des ressources matérielles, chaque partition système incluant au moins un service du système d'exploitation ; et un automate de démarrage apte à être exécuté en premier suite à une mise sous tension de la plateforme et configuré pour lancer le paquet d'amorçage.

L'avantage de la configuration des applications logicielles lors de la conception est de garantir une meilleure maîtrise de la configuration prise en compte, de ne pas nécessiter de devoir ajouter de la robustesse sur les valeurs de configuration, et de faciliter une certification, en particulier une certification ETSO (de l'anglais *European Technical Standard Order*), des applications logicielles en permettant de caractériser précisément les performances de la plateforme lors de la conception, sans variation possible liée à un contexte utilisateur lors de l'exécution.

Toutefois, des évolutions de contexte d'exécution des applications logicielles nécessitent très souvent de devoir régénérer de nouvelles versions d'applications logicielles, intégrant les nouvelles valeurs de configurations.

Le but de l'invention est alors de proposer une plateforme informatique permettant de faciliter la prise en compte d'évolutions de contexte d'exécution des applications logicielles.

A cet effet, l'invention a pour objet une plateforme informatique selon la revendication 1.

Avec la plateforme informatique selon l'invention, le fichier additionnel de configuration incluant au moins une table de configuration de ressources facilite la prise en compte d'évolutions de contexte d'exécution de la ou des applications logicielles en permettant l'ajout de nouvelles valeurs de configuration après la conception de ladite ou desdites applications logicielles.

Autrement dit, la plateforme informatique selon l'invention permet d'effectuer la configuration des applications logicielles lors de la conception, avec les avantages associés, tout en permettant l'ajout de nouvelles valeurs de configuration après ladite conception, remédiant ainsi à l'inconvénient précité.

De préférence, l'automate de démarrage est configuré pour lancer le fichier additionnel de configuration avant le paquet d'amorçage si ledit fichier additionnel inclut une table du premier type, c'est-à-dire contenant des valeurs de configuration des ressources matérielles, et la ou chaque table de configuration du fichier additionnel de configuration remplace alors la table de configuration de même type parmi l'au moins une table primaire.

De préférence encore, si le fichier additionnel de configuration inclut une table de configuration de ressources matérielles, i.e. une table du premier type, alors les valeurs de configuration de ressources matérielles contenues dans ladite table appartiennent chacune à des plages de valeur pour lesquelles la plateforme informatique a été préalablement certifiée, ce qui permet de conserver le bénéfice de la certification effectuée, et d'éviter alors une nouvelle certification, ou recertification.

De préférence encore, le fichier additionnel de configuration est constitué de l'au moins une table de configuration, et le fichier additionnel de configuration est alors plus facile à générer et plus rapide à charger qu'une nouvelle version du paquet d'amorçage modifié pour y introduire les nouvelles valeurs de configuration.

Suivant d'autres aspects avantageux de l'invention, la plateforme informatique est selon l'une quelconque des revendications 2 à 9.

L'invention a également pour objet un système électronique avionique selon la revendication 10.

Suivant d'autres aspects avantageux de l'invention, le système avionique est selon la revendication 11 ou 12.

Suivant un autre aspect avantageux de l'invention, le système avionique comprend en outre un écran d'affichage et/ou une interface homme-machine.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

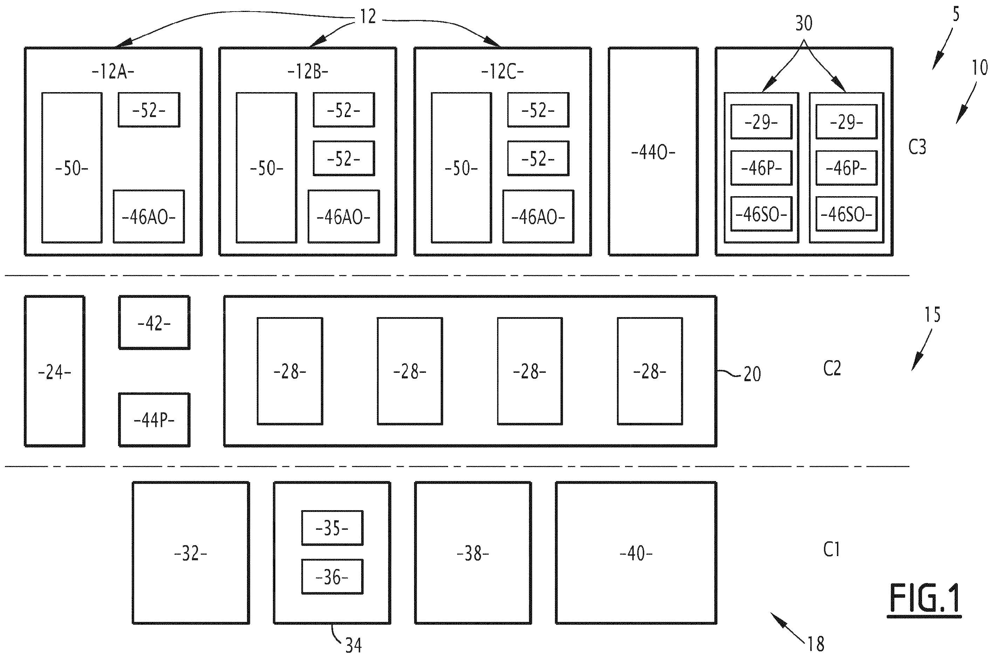

- la figure 1 est une représentation schématique d'un aéronef équipé d'un système électronique avionique comprenant un ensemble de partitions applicatives et une plateforme informatique apte à exécuter les partitions applicatives, la plateforme comportant des ressources, dont des ressources matérielles incluant un processeur, une mémoire vive et une mémoire de stockage, et hébergeant un système d'exploitation ; la plateforme comportant en outre un automate de démarrage et un paquet d'amorçage incluant un noyau, un pilote de ressources, un ensemble de partitions système ; le système avionique comprenant des tables primaire, secondaire et tertiaires de configuration de ressources, ces tables étant respectivement de premier, deuxième et troisième types ; l'automate de démarrage étant configuré pour vérifier si au moins un fichier additionnel de configuration incluant au moins une table de configuration est présent dans la mémoire de stockage et pour lancer le cas échéant le fichier additionnel de configuration ; l'au moins une table du fichier additionnel de configuration étant alors utilisée à la place d'au moins une table respective de même type ;

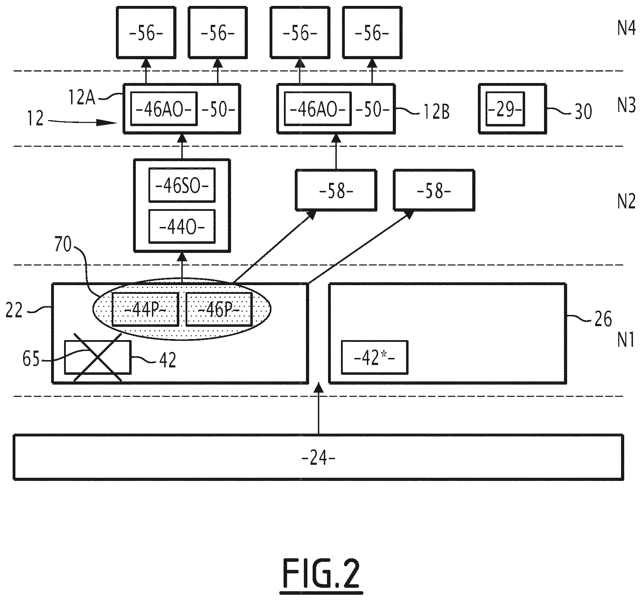

- la figure 2 est une vue illustrant un premier exemple de mise en œuvre de l'invention, en mode opérationnel de fonctionnement de la plateforme, où le système avionique comprend un premier fichier additionnel de configuration incluant une table de configuration du premier type, utilisée alors à la place de la table primaire ;

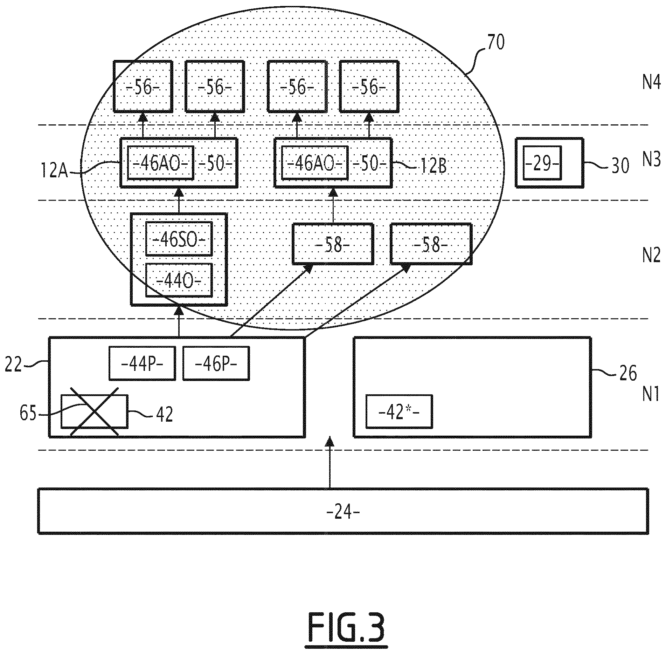

- la figure 3 est une vue analogue à celle de la figure 2 en mode dégradé de fonctionnement de la plateforme ;

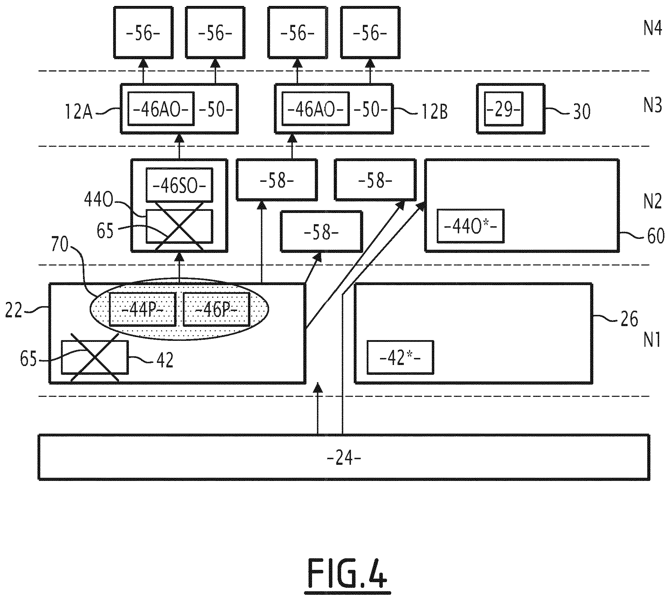

- la figure 4 est une vue illustrant un deuxième exemple de mise en œuvre de l'invention, en mode opérationnel de fonctionnement, où le système avionique comprend à la fois le premier fichier additionnel de configuration incluant la table de configuration du premier type et un deuxième fichier additionnel de configuration incluant une table de configuration du deuxième type, chaque table de fichier additionnel de configuration étant alors utilisée à la place d'une table respective de même type stockée initialement dans le système avionique ;

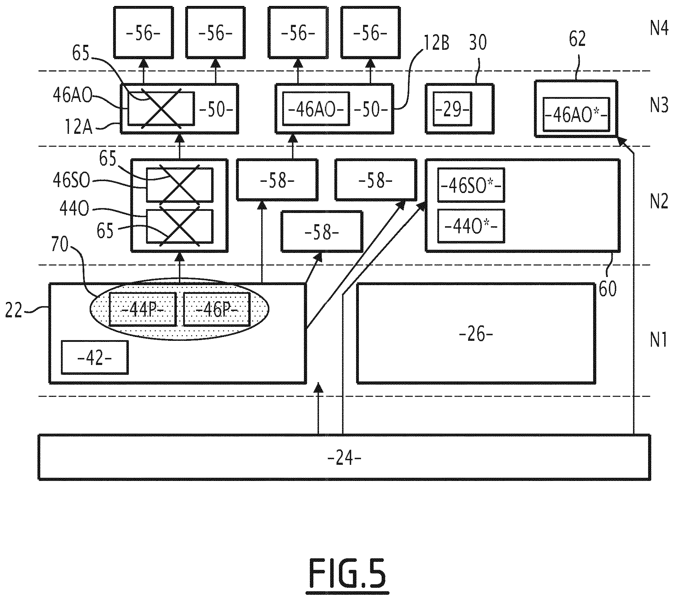

- la figure 5 est une vue illustrant un troisième exemple de mise en œuvre de l'invention, en mode opérationnel de fonctionnement, où le système avionique comprend à la fois le deuxième fichier additionnel de configuration incluant cette fois une table de configuration du deuxième type et une table de configuration du troisième type, et un troisième fichier additionnel de configuration incluant une table de configuration du troisième type, chaque table de fichier additionnel de configuration étant alors utilisée à la place d'une table respective de même type stockée initialement dans le système avionique ;

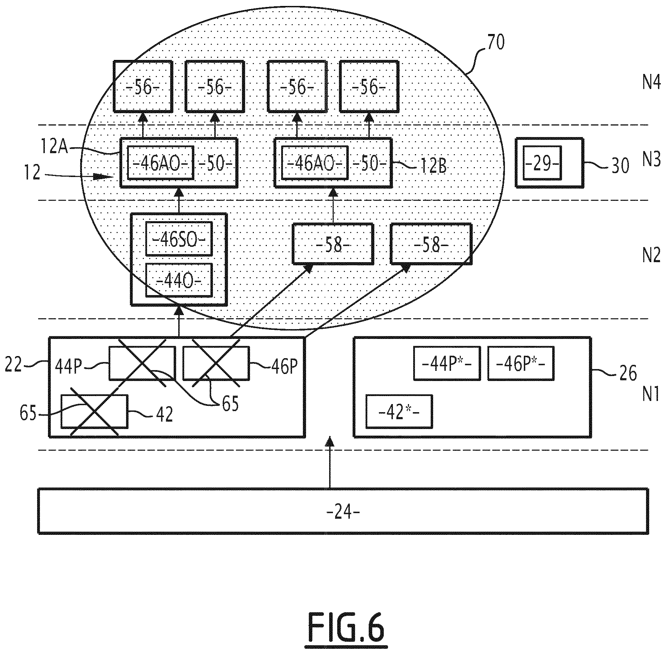

- la figure 6 est une vue illustrant un quatrième exemple de mise en œuvre de l'invention, en mode dégradé de fonctionnement, où le système avionique comprend le premier fichier additionnel de configuration incluant à la fois la table de configuration de premier type et des tables de configuration de deuxième et troisième types, utilisées alors à la place de tables primaire, secondaire et tertiaire respectives ;

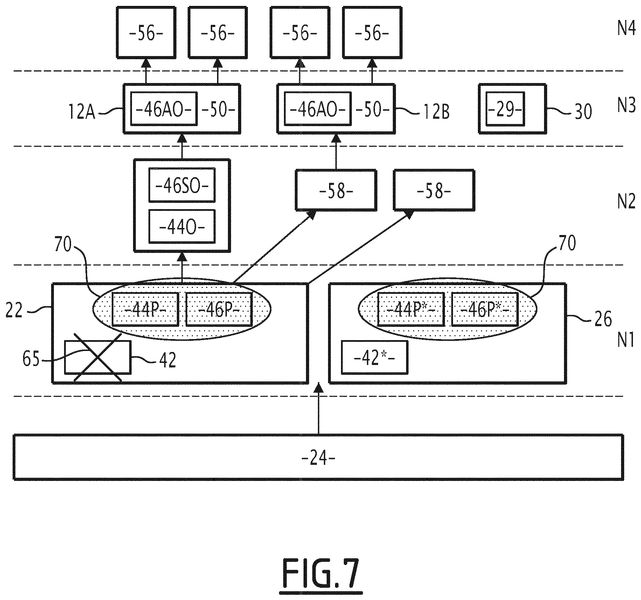

- la figure 7 est une vue analogue à celle de la figure 6, en mode opérationnel de fonctionnement, dans lequel les tables de configuration de deuxième et troisième types incluses dans le premier fichier additionnel de configuration ne sont alors pas utilisées ; et

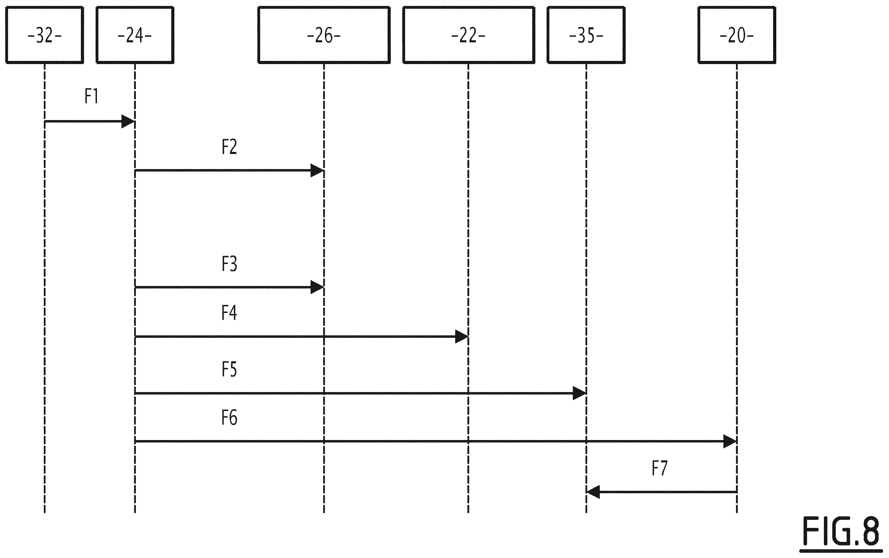

- la figure 8 est un organigramme représentant une séquence de démarrage du système avionique de la figure 1, avec vérification de la présence ou non d'au moins un fichier additionnel de configuration.

Sur la figure 1, un aéronef 5 est équipé d'un système électronique avionique 10 comprenant un ensemble de partitions applicatives 12 et une plateforme informatique 15 apte à exécuter l'ensemble de partitions applicatives 12.

L'aéronef 5 est de préférence un avion. En variante, l'aéronef 5 est un hélicoptère, ou encore un drone piloté à distance par un pilote.

La plateforme informatique 15 comporte des ressources 18 et héberge un système d'exploitation 20. La plateforme informatique 15 comporte également un paquet d'amorçage 22, visible sur les figure 2 à 8, et un automate de démarrage 24 apte à être exécuté en premier suite à une mise sous tension de la plateforme 15 et configuré pour lancer le paquet d'amorçage 22.

Avantageusement, la plateforme informatique 15 comporte en outre un premier fichier additionnel de configuration 26, visible sur les figure 2 à 8 et décrit plus en détail par la suite.

Le système d'exploitation 20, également appelé OS (de l'anglais *Operating System*), est, par exemple, un système d'exploitation conforme à la norme ARINC 653, ou un système d'exploitation POSIX, ou encore un hyperviseur, ou encore un middleware.

L'homme du métier comprendra alors que le système d'exploitation 20 s'entend au sens large et est, de manière plus générale, un ensemble d'au moins un logiciel de base 28, conçu pour offrir des services 29 de différents types à chaque partition applicative 12 et/ou partition système 30.

Un service 29 est donc une fonction du logiciel de base utilisable par la ou les applications et atteignable par un appel, également appelé appel à un service (de l'OS) ou encore appel système. Un exemple de logiciel de base est un OS ARINC 653 ou POSIX qui fournit de tels services. Dans le contexte de l'invention, l'homme du métier comprendra que c'est la notion d'appel à un service qui importe, et non pas le service en tant que tel, offert par le logiciel de base.

Les services 29 offerts par le système d'exploitation 20 sont connus en soi, et sont par exemple des services d'acquisition d'entrée(s)/sortie(s), de gestion de processus, de gestion de protocole(s) de communication, etc. Les types de service sont alors l'acquisition d'entrée(s)/sortie(s), la gestion de processus, la gestion de protocole(s) de communication et la gestion d'une temporisation, en particulier son déclenchement.

Le système avionique 10 comprend également un ensemble de partitions système 30, chaque partition système 30 incluant au moins un service 29 du système d'exploitation 20.

Les ressources 18 de la plateforme 15 sont des éléments physiques, i.e. matériels, ou logiques propres à être mis à disposition de la ou des partitions applicatives 12 et/ou partitions système 30.

Les ressources 18 incluent des ressources matérielles, notamment un processeur 32 et des ressources mémoire 34, tel qu'une mémoire vive 35 et une mémoire de stockage 36. La mémoire de stockage 36 est par exemple une mémoire morte programmable, telle qu'une mémoire PROM ou FPROM (de l'anglais *Programmable Read Only Memory* ou *Field Programmable Read Only Memory*)*.*

En complément, les ressources 18 incluent des ressources de type entrées et sorties 38, également appelés ressources IO (de l'anglais *Input Output*), et des ressources de type graphique 40, c'est-à-dire permettant un affichage de données.

En complément encore, les ressources 18 incluent des ressources spécifiques au réseau avionique, non représentées. De telles ressources sont, par exemple, des routeurs de communication d'un réseau ARINC664, en particulier ARINC664 Partie 3 ou ARINC664 Partie 7.

La plateforme informatique 15 est typiquement apte à fonctionner suivant un mode de fonctionnement choisi au moins parmi un mode dégradé, également noté PDL, où seul l'ensemble de partition(s) système 30 est exécutable parmi les ensembles de partition(s) système 30 et de partition(s) applicative(s) 12, et un mode opérationnel, également noté OPS, où les ensembles de partition(s) système 30 et de partition(s) applicative(s) 12 sont chacun exécutables.

Le paquet d'amorçage 22 inclut un noyau, au moins un pilote de ressources, un ensemble respectif de partition(s) système 30 et une table primaire 42 de configuration de ressources, chaque partition système 30 incluant au moins un service 29 du système d'exploitation 20, la table primaire 42 étant d'un premier type, noté HWCT.

En complément, le système avionique 10 comprend au moins une table secondaire 44 de configuration de ressources, stockée dans la mémoire de stockage 36, chaque table secondaire 44 étant d'un deuxième type, noté MGCT, le deuxième type MGCT étant distinct du premier type HWCT.

Avantageusement, le système avionique 10 comprend au moins deux tables secondaires 44 distinctes, au moins l'une notée 44O étant prévue pour la plateforme informatique 15 en mode opérationnel de fonctionnement, et au moins l'autre notée 44P étant prévue pour la plateforme informatique en mode dégradé de fonctionnement. Chaque table secondaire de configuration de ressources 44O associée au mode opérationnel de fonctionnement contient des valeurs de configuration de configuration de ressources utilisables par un ensemble respectif de partition(s) applicatives. Chaque table secondaire de configuration de ressources 44P associée au mode dégradé de fonctionnement contient des valeurs de configuration de configuration de ressources utilisables par un ensemble respectif de partition(s) système.

En complément encore, le système avionique 10 comprend un ensemble de tables tertiaires système 46SO, 46P de configuration de ressources pour l'ensemble de partition(s) système 30, stocké dans la mémoire de stockage 36. Chaque table tertiaire système 46SO, 46P est d'un troisième type HACT. Le troisième type HACT est distinct à la fois du premier type HWCT et du deuxième type MGCT. Dans l'exemple de la figure 1, chaque table tertiaire système 46SO, 46P est incluse au sein d'une partition 30 respective.

Avantageusement, le système avionique 10 comprend une table de configuration de ressources du deuxième type MGCT pour chacun des modes de fonctionnement parmi le mode dégradé 44P et le mode opérationnel 44O. La table de deuxième type pour le mode dégradé 44P est constituée des valeurs de configuration de ressources utilisables par l'ensemble de partition(s) système 30. La table de deuxième type pour le mode opérationnel 44O est constituée des valeurs de configuration des ressources utilisables par l'ensemble de partition(s) applicative(s) 12.

Avantageusement encore, le système avionique 10 comprend, pour chaque partition système 30, une table de configuration de ressources du troisième type HACT pour chacun des modes de fonctionnement parmi le mode dégradé PDL et le mode opérationnel OPS. Chaque table de troisième type associée à une partition système 30 respective pour le mode dégradé HACT_ PDL est constituée des valeurs de configuration des ressources utilisées par ladite partition système 30 en mode dégradé PDL. Chaque table de troisième type associée à une partition système 30 respective pour le mode opérationnel 46SO est constituée des valeurs de configuration des ressources utilisées par ladite partition système 30 en mode opérationnel OPS.

Chaque partition applicative 12 inclut une application logicielle avionique 50 et une table tertiaire applicative 46AO de configuration de ressources. Chaque table tertiaire applicative 46AO est du troisième type HACT et contient des valeurs de configuration des ressources utilisées par la partition applicative 12 respective. Chaque application logicielle avionique 50 est destinée à être exécutée par la plateforme 15, est alors conçue pour émettre un ou plusieurs appels à destination du système d'exploitation 20, et est également configurée pour utiliser des ressources 18 de la plateforme.

Chaque partition applicative 12 est apte à être exécutée seulement en mode opérationnel OPS, et n'est pas exécutée en mode dégradé PDL. Chaque partition système 30 est apte à être exécutée aussi bien en mode opérationnel OPS qu'en mode dégradé PDL.

En complément, chaque partition applicative 12 inclut également au moins une bibliothèque 52 (de l'anglais *library*)*.* Chaque bibliothèque 52 est un ensemble de fonctions, de classes, d'interfaces ou de modules logiciels qui sont regroupés ensemble pour être utilisés plus facilement par l'application logicielle avionique 50 respective. Les fonctions, classes, interfaces ou encore modules logiciels d'une bibliothèque 52 respective concernent par exemple la gestion de bases de données, la manipulation de fichiers, la création de graphiques, ou encore la communication avec d'autres applications logicielles avionique 50. Lorsque l'application logicielle 50 est exécutée, la ou les bibliothèques 52 de la partition applicative 12 correspondante sont chargées en mémoire et les éléments qu'elle contient sont alors apte à être appelés à partir du code de l'application 50.

Chaque partition applicative 12 comporte typiquement, et est de préférence constituée, d'une seule application logicielle avionique 50 et d'une ou plusieurs bibliothèques 52 associées à cette application logicielle avionique.

Dans l'exemple de la figure 1, le système avionique 10 comprend trois partitions applicatives 12, à savoir une première partition applicative 12A, une deuxième partition applicative 12B et une troisième partition applicative 12C. Dans cet exemple, la première partition applicative 12A contient une seule bibliothèque 52, et les deuxième et troisième partitions applicatives 12B, 12C contiennent chacune deux bibliothèques 52.

Une table de configuration du premier type HWCT contient des valeurs de configuration des ressources matérielles de la plateforme informatique 15, et forme alors une table de configuration des ressources matérielles de la plateforme 15. La table de configuration du premier type HWCT comprend typiquement les valeurs des grandeurs suivantes : fréquence de fonctionnement du processeur 32 ; nombre de cœur(s) du processeur 32 ; quantité de mémoire vive, i.e. taille de la mémoire vive 35 ; quantité de mémoire cache, i.e. taille de la mémoire du processeur 32 ; nombre d'entrées-sorties parmi les ressources IO 38 ; fréquences supportées selon la norme ARINC 429, valeur de coefficient de mise à l'échelle (de l'anglais *prescaler*) à programmer pour la datation des messages, etc.

Une table de configuration du deuxième type MGCT contient des valeurs de configuration de ressources utilisables par un ensemble respectif de partition(s), par exemple par l'ensemble de partition(s) applicative(s) 12, ou encore respectivement par l'ensemble de partition(s) système 30.

La plateforme informatique 15 étant susceptible d'être incluse dans différents systèmes avioniques 10 et/ou d'être positionnée en différentes positions à bord de l'aéronef 5, les ressources 18 utilisables par un ensemble respectif de partition(s) 12, 30 ne correspondent pas nécessairement à toutes les ressources supportables de la plateforme 15. Ces ressources utilisables correspondent généralement seulement à une portion desdites ressources 18, strictement plus petite, i.e. plus réduite, que la totalité desdites ressources 18, dont les valeurs sont directement liées à la position de la plateforme informatique 15 à bord de l'aéronef 5.

La table de configuration du deuxième type MGCT comprend typiquement les valeurs des grandeurs suivantes : quantité de temps du processeur 32 utilisable par l'ensemble respectif de partition(s) 12, 30 ; nombre de cœur(s) du processeur 32 utilisable(s) par ledit ensemble de partition(s) 12, 30 ; quantité de mémoire vive 35 utilisable par ledit ensemble de partition(s) 12, 30 ; quantité de mémoire cache utilisable par ledit ensemble de partition(s) 12, 30 ; identifiant(s) d'entrée(s)-sortie(s) utilisable(s) par ledit ensemble de partition(s) 12, 30 ; coefficients d'accélération du déplacement des curseurs sur des écrans tactiles inclus dans les ressources de type graphique 40 ; seuil de déclenchement d'une sanction partition 12, 30 par un module de surveillance de la plateforme informatique 15. La sanction partition dépend typiquement d'une autorisation associée ou non à la partition 12, 30 objet de cette sanction. Lorsque la partition 12, 30 est une partition avec autorisation, par exemple avec droit de niveau module, la sanction partition est un redémarrage de la plateforme 15. Lorsque la partition 12, 30 est une partition sans autorisation, par exemple sans droit de niveau module, la sanction partition est un redémarrage de la partition 12, 30 concernée.

Une table de configuration du troisième type HACT contient des valeurs de configuration de ressources utilisées par une partition 12, 30 respective, par exemple par une partition applicative 12 respective, ou encore par une partition système 30 respective.

Préférentiellement, chaque table de configuration du troisième type HACT pour une partition applicative 12 respective, ainsi que chaque table de configuration du troisième type HACT pour une partition système 30 respective, doit être compatible avec les budgets de la table de configuration du deuxième type MGCT pour les ensembles de partition(s) applicative(s) 12 et partition système 30. Autrement dit, la somme des valeurs de configuration contenues dans toutes les tables respectives de configuration du troisième type HACT ne doivent pas excéder celles contenues dans la table de configuration du deuxième type MGCT correspondante.

La table de configuration du troisième type HACT comprend typiquement les valeurs des grandeurs suivantes : identifiant(s) de fenêtre(s) temporelle(s) du processeur 32 utilisée(s) par la partition 12, 30 respective ; identifiant(s) de cœur(s) du processeur 32 utilisé(s) par ladite partition 12, 30 ; identifiant d'une zone de la mémoire vive 35 utilisée par ladite partition 12, 30 ; définition des objets de type port de communication (nom, taille, fréquence de rafraichissement ...) et identifiant de la ressource concernée parmi les entrées-sorties utilisées par ladite partition 12, 30.

Dans l'exemple de la figure 1, le système avionique 10 est représenté sous forme d'un empilement de couches C1, C2, C3 ; à savoir une première couche C1, également appelée couche matérielle ; une deuxième couche C2 au-dessus de la première couche C1, la deuxième couche C2 étant également appelée couche d'exploitation, ou encore couche OS ; et une troisième couche C3, également appelée couche partitions, au-dessus de la deuxième couche C2.

La première couche C1 comporte alors les ressources 18. La deuxième couche C2 comporte le système d'exploitation 20, l'automate de démarrage 24, la table primaire 42 et la table secondaire 44P associée au mode dégradé de fonctionnement. La troisième couche C3 comporte l'ensemble de partitions applicatives 12, l'ensemble de partitions système 30, la table secondaire 44O associée au mode opérationnel de fonctionnement, et les tables tertiaires système et applicatives 46SO, 46AO, étant rappelé que les tables tertiaires applicatives 46AO sont incluses directement dans les partitions applicatives 12.

L'homme du métier observera alors que la plateforme informatique 15 correspond aux première et deuxième couches C1, C2 du système avionique 10.

Dans les exemples des figures 2 à 7, le système avionique 10 est représenté sous forme de niveaux fonctionnels, avec un premier niveau fonctionnel N1 correspondant aux éléments susceptibles d'être lancés en premier par l'automate de démarrage 24, à savoir le paquet d'amorçage 22 et le premier fichier additionnel de configuration 26. Le premier niveau fonctionnel N1 inclus alors la ou les tables primaires 42, la ou les tables secondaires 44P associées au mode dégradé de fonctionnement, et la ou les tables tertiaires 46P associées audit mode dégradé.

Le système avionique 10 comporte ensuite un deuxième niveau fonctionnel N2 incluant typiquement la table secondaire 44O associée au mode opérationnel de fonctionnement OPS, également appelée table secondaire opérationnelle 44O, et une ou plusieurs tables tertiaires système 46SO aussi associées au mode opérationnel OPS, ainsi qu'en complément une ou plusieurs tables auxiliaires 58. Le deuxième niveau fonctionnel N2 est en lien avec le premier niveau fonctionnel N1, les éléments du deuxième niveau fonctionnel N2 étant susceptibles d'être appelés par un élément correspondant du premier niveau fonctionnel N1.

Le système avionique 10 comporte ensuite un troisième niveau fonctionnel N3 incluant typiquement l'ensemble de partitions applicatives 12, ainsi qu'une ou plusieurs partitions système 30. Les tables tertiaires applicatives 46AO sont alors incluses dans ce troisième niveau fonctionnel N3, chacune étant elle-même incluse dans une partition applicative 12 correspondante. Le troisième niveau fonctionnel N3 est en lien avec le deuxième niveau fonctionnel N2, ainsi qu'avec le premier niveau fonctionnel N1, la partition système 30 étant par exemple exécutée en mode dégradé, et appelée alors directement par le paquet d'amorçage 22 ou bien par le premier fichier additionnel de configuration 26. Chaque partition applicative 12 est typiquement appelée par un élément correspondant du deuxième niveau fonctionnel N2, à savoir par la table secondaire opérationnelle 44O ou bien par une table auxiliaire 58 respective.

Le système avionique 10 comporte enfin un quatrième niveau fonctionnel N4 incluant typiquement une ou plusieurs applications logicielles complémentaires 56. Le quatrième niveau fonctionnel N4 est en lien avec le troisième niveau fonctionnel N3, chaque application complémentaire 56 étant typiquement appelée par une partition applicative 12 respective, notamment par l'application logicielle avionique 50 correspondante.

Selon l'invention, le système avionique 10 est susceptible de comprendre au moins un fichier additionnel de configuration parmi le premier fichier additionnel de configuration 26, un deuxième fichier additionnel de configuration 60 et un troisième fichier additionnel de configuration 62, chaque fichier additionnel de configuration 26, 60, 62 incluant au moins une table de configuration de ressources d'un type choisi parmi le premier type HWCT, le deuxième type MGCT et le troisième type HACT. Le premier fichier additionnel de configuration 26 inclut typiquement une table de premier type HWCT, ainsi qu'en complément facultatif une table de deuxième type MGCT pour le mode dégradé de fonctionnement et/ou une table de troisième type HACT pour ledit mode dégradé. Le deuxième fichier additionnel de configuration 60 inclut une table de configuration de deuxième type MGCT et/ou une table de configuration de troisième type HACT. Le troisième fichier additionnel de configuration 62 inclut typiquement une table de configuration de troisième type HACT. Avantageusement, chacun des premier, deuxième et troisième fichiers additionnel de configuration 26, 60, 62 inclut seulement l'au moins une table de configuration d'un type choisi parmi les premier HACT, deuxième MGCT et troisième HACT types, et chacun des premier, deuxième et troisième fichiers additionnel de configuration 26, 60, 62 est de préférence constitué de ladite au moins une table de configuration du type précité.

Avantageusement, le système avionique 10 comprend, dans la mémoire de stockage 36, au moins un fichier additionnel de configuration 26, 60, 62, et de préférence plusieurs fichiers additionnels de configuration 26, 60, 62 parmi les premier 26, deuxième 60 et troisième 62 fichiers additionnels de configuration.

L'automate de démarrage 24 est configuré pour vérifier si un fichier additionnel de configuration 26, 60, 62 est présent dans la mémoire de stockage 36, et pour lancer alors le fichier additionnel de configuration 26, 60, 62, chaque table du fichier additionnel de configuration 26, 60, 62 étant alors utilisée à la place d'une table respective de même type parmi les tables primaire 42, secondaire 44O, 44P, tertiaire système 46SO, 46P et tertiaire applicative 46AO.

L'homme du métier observera que si lors de la vérification de la présence dudit fichier additionnel de configuration, la mémoire de stockage 36 ne contient aucun fichier additionnel de configuration 26, 60, 62, alors l'automate de démarrage 24 est configuré pour lancer le paquet d'amorçage 22, en l'absence dudit fichier additionnel de configuration 26, 60, 62.

Avantageusement, si le fichier additionnel de configuration 26 inclut une table du premier type HWCT, alors l'automate de démarrage 24 est configuré pour lancer le fichier additionnel de configuration 26 avant le paquet d'amorçage 22.

En complément, l'automate de démarrage 24 est configuré pour lancer le fichier additionnel de configuration 26, 60, 62 seulement si au moins une condition de lancement est remplie. Chaque condition de lancement est une vérification d'authenticité du fichier additionnel de configuration ou une vérification d'intégrité du fichier additionnel de configuration.

Selon ce complément, l'automate de démarrage 24 est de préférence configuré pour lancer le fichier additionnel de configuration 26, 60, 62 seulement si toutes les conditions de lancement sont remplies, c'est-à-dire si le fichier additionnel de configuration 26, 60, 62 est à la fois authentique et intègre.

De préférence, le paquet d'amorçage 22 et le premier fichier additionnel de configuration 26 incluent chacun au plus une table de configuration du premier type HWCT.

Avantageusement, si le premier fichier additionnel de configuration 26 inclut une table de configuration du premier type HWCT alors les valeurs de configuration de ressources matérielles contenues dans ladite table appartiennent chacune à des plages de valeur pour lesquelles la plateforme informatique 15 a été préalablement certifiée.

En complément facultatif, le paquet d'amorçage 22 et/ou le premier fichier additionnel de configuration 26 incluent plusieurs tables de configuration du deuxième type MGCT et/ou plusieurs tables de configuration du troisième type HACT.

Différents exemples de mise en œuvre de l'invention vont être à présent décrits en regard des figures 2 à 7.

Dans l'exemple de la figure 2, le système avionique 10, et en particulier la plateforme informatique 15, inclut le premier fichier additionnel de configuration 26, tout en ne comportant pas d'autre fichier additionnel de configuration. Le paquet d'amorçage 22 comporte la table primaire 42, ainsi que les tables secondaire 44P et tertiaire 46P associées au mode dégradé de fonctionnement PDL.

Dans cet exemple de la figure 2, le premier fichier additionnel de configuration 26 comporte seulement une table de configuration du premier type HWCT, par exemple une nouvelle version de la table primaire 42, la nouvelle version étant notée 42*. Dans cet exemple, le premier fichier additionnel de configuration 26 ne comporte pas de table de configuration du deuxième type MGCT ou du troisième type HACT.

Lorsque le premier fichier additionnel de configuration 26 est lancé par l'automate de démarrage 24, la nouvelle version de la table primaire 42* incluse dans le premier fichier additionnel 26 est alors utilisée à la place de la table primaire 42 du paquet d'amorçage 22. Autrement dit, la table primaire 42 du paquet d'amorçage est alors contournée par la nouvelle version de la table primaire 42* incluse dans le premier fichier additionnel de configuration 26.

De manière générale, dans les exemples des figures 2 à 7, chaque table contournée par une autre table d'un fichier additionnel de configuration 26, 60, 62 respectif est barrée par une croix 65. Dans l'exemple de la figure 2, la table primaire 42 du paquet d'amorçage est alors barrée par la croix 65.

Cet exemple de la figure 2 correspond au mode opérationnel de fonctionnement OPS, et les tables secondaire 44P et tertiaire 46P associées au mode dégradé PDL ne sont alors pas utilisées.

De manière générale, dans les exemples des figures 2 à 7, les éléments inexploités de par le mode de fonctionnement considéré dans l'exemple associé sont masqués par une forme elliptique 70. Dans l'exemple de la figure 2, les tables secondaire 44P et tertiaire 46P, sont alors masquées par la forme elliptique 70.

Dans l'exemple de la figure 3, le système avionique 10, et en particulier la plateforme informatique 15, inclut les mêmes éléments que dans l'exemple de la figure 2, et l'exemple de la figure 3 diffère de celui de la figure 2 de par le mode de fonctionnement, cet exemple correspondant au mode dégradé de fonctionnement PDL.

De la même manière que dans l'exemple de la figure 2, lorsque le premier fichier additionnel de configuration 26 est lancé par l'automate de démarrage 24 suite à la mise sous tension de la plateforme informatique 15, la nouvelle version de la table primaire 42* incluse dans le premier fichier additionnel 26 est utilisée à la place de la table primaire 42 du paquet d'amorçage 22.

À la différence de l'exemple de la figure 2, les tables secondaire 44P et tertiaire 46P associées au mode dégradé de fonctionnement sont cette fois-ci utilisées, et les tables des deuxième MGCT et troisième HACT types mises en œuvre sont alors celles du paquet d'amorçage 22, le premier fichier additionnel de configuration 26 incluant seulement la nouvelle version de la table primaire 42* du premier type HWCT, et ne comportant pas de table de configuration du deuxième type MGCT ou du troisième type HACT. Autrement dit, parmi les tables incluses dans le paquet d'amorçage 22, seule la table primaire 42 est contournée et alors représentée de manière barrée par la croix 65, les tables secondaire 44P et tertiaire 46P étant utilisées normalement.

Cet exemple de la figure 3 correspondant au mode dégradé de fonctionnement PDL, la partition système 30 est exécutée après la mise en œuvre du paquet d'amorçage 22. Les autres éléments des deuxième, troisième et quatrième niveaux fonctionnels N2, N3, N4 ne sont pas utilisés, et sont alors masqués par la forme elliptique 70.

Dans l'exemple de la figure 4, le système avionique 10 inclut les mêmes éléments que dans les exemples des figures 2 et 3, et comporte en outre le deuxième fichier additionnel de configuration 60 incluant une table de configuration du deuxième type MGCT, par exemple une nouvelle version de la table secondaire 44O associée au mode opérationnel de fonctionnement OPS, la nouvelle version étant notée 44O*.

De manière analogue à l'exemple de la figure 2, cet exemple de la figure 4 correspond au mode opérationnel OPS, et les tables secondaire 44P et tertiaire 46P associées au mode dégradé PDL ne sont alors pas utilisées, ces tables 44P, 46P étant alors masquées par la forme elliptique 70.

De la même manière que dans les exemples des figures 2 et 3, lorsque le premier fichier additionnel de configuration 26 est lancé par l'automate de démarrage 24 suite à la mise sous tension de la plateforme informatique 15, la nouvelle version de la table primaire 42* incluse dans le premier fichier additionnel 26 est utilisée à la place de la table primaire 42 du paquet d'amorçage 22.

Ensuite, le deuxième fichier additionnel de configuration 60 est également lancé par l'automate de démarrage 24, la nouvelle version de la table secondaire 44O* associée au mode opérationnel OPS est utilisée à la place de celle du deuxième niveau fonctionnel N2 initialement stockée dans la mémoire de stockage 36.

Dans cet exemple de la figure 4, les tables contournées sont donc la table primaire 42 du paquet d'amorçage 22 et la table secondaire 44O initiale associée au mode opérationnel OPS, ces deux tables étant alors représentées de manière barrée par la croix 65.

L'exemple de la figure 5 est similaire à celui de la figure 4, à la différence que dans cet exemple de la figure 5 le système avionique 10 comprend en outre le troisième fichier additionnel de configuration 62 incluant une table de configuration du troisième type HACT, par exemple une nouvelle version de la table tertiaire applicative 46AO de la première partition applicative 12A, la nouvelle version étant notée 46AO*.

Une autre différence entre les exemples des figures 4 et 5 est que dans l'exemple de la figure 5, le deuxième fichier additionnel de configuration 60 inclut à la fois une table de configuration du deuxième type MGCT, par exemple la nouvelle version de la table secondaire opérationnelle 44O*, et une table de configuration du troisième type HACT, par exemple une nouvelle version d'une table tertiaire système 46SO respective, la nouvelle version étant notée 46SO*, de sorte qu'à la fois la table secondaire opérationnelle 44O et la table tertiaire système 46SO respective sont alors contournées.

Une dernière différence entre les exemples des figures 4 et 5 est que dans l'exemple de la figure 5, le premier fichier additionnel de configuration 26 est vide et ne comporte pas de table de configuration du premier type HWCT, ou est absent, ou encore n'est pas authentique et/ou intègre, de sorte que la table primaire 42 du paquet d'amorçage 22 n'est pas contournée et est utilisée par l'automate de démarrage 24.

Dans cet exemple de la figure 5, les tables contournées sont donc la table secondaire 44O initiale associée au mode opérationnel OPS, la table tertiaire système 46SO respective et la table tertiaire applicative 46AO de la première partition applicative 12A, ces trois tables étant alors représentées de manière barrée par la croix 65.

L'exemple de la figure 6 est similaire à celui de la figure 3, à la différence que dans cet exemple de la figure 6, le premier fichier additionnel de configuration 26 inclut à la fois une table de configuration du premier type HWCT, par exemple la nouvelle version de la table primaire 42*, une table de configuration du deuxième type MGCT, par exemple une nouvelle version de la table secondaire 44P associée au mode dégradé PDL, la nouvelle version étant notée 44P*, et également une table de configuration du troisième type HACT, par exemple une nouvelle version de la table tertiaire 46P associée au mode dégradé PDL, la nouvelle version étant notée 46P*.

Dans cet exemple de la figure 6, les tables contournées sont donc la table primaire 42, et les tables secondaire 44P et tertiaire 46P associées au mode dégradé PDL, ces trois tables du paquet d'amorçage 22 étant alors représentées de manière barrée par la croix 65.

Cet exemple de la figure 6 correspondant au mode dégradé de fonctionnement PDL, la partition système 30 est exécutée après la mise en œuvre du premier fichier additionnel de configuration 26. Les autres éléments des deuxième, troisième et quatrième niveaux fonctionnels N2, N3, N4 ne sont pas utilisés, et sont alors masqués par la forme elliptique 70.

Dans l'exemple de la figure 7, le système avionique 10, et en particulier la plateforme informatique 15, inclut les mêmes éléments que dans l'exemple de la figure 6, et l'exemple de la figure 7 diffère de celui de la figure 6 de par le mode de fonctionnement, cet exemple correspondant au mode opérationnel OPS.

De la même manière que dans l'exemple de la figure 6, lorsque le premier fichier additionnel de configuration 26 est lancé par l'automate de démarrage 24 suite à la mise sous tension de la plateforme informatique 15, la nouvelle version de la table primaire 42* incluse dans le premier fichier additionnel 26 est utilisée à la place de la table primaire 42 du paquet d'amorçage 22.

En revanche, à la différence de l'exemple de la figure 6, les tables secondaire 44P et tertiaire 46P associées au mode dégradé PDL, qu'il s'agisse de celles du paquet d'amorçage 22 ou encore de celles du premier fichier additionnel de configuration 26, ne sont pas utilisées, et sont alors masquées par la forme elliptique 70.

Dans cet exemple de la figure 7, la seule table contournée est donc la table primaire 42 du paquet d'amorçage 22 qui est alors représentée de manière barrée par la croix 65.

L'homme du métier observera que les exemples des figures 2, 3, 6 et 7 concernent plus particulièrement la plateforme informatique 15, seul le premier fichier additionnel de configuration 26 parmi les fichiers additionnels de configuration 26, 60, 62 étant présent dans la mémoire de stockage 36 dans ces exemples.

L'homme du métier comprendra également que les différents cas possibles sont les suivants pour le système avionique 10 selon l'invention :
- présence du premier fichier additionnel de configuration 26, mais pas des deuxième et troisième fichiers additionnels de configuration 60, 62 : la ou les tables contournées sont alors les tables du paquet d'amorçage 22 pour lesquelles une nouvelle version est présente dans le premier fichier additionnel de configuration 26, et en tenant compte également du mode de fonctionnement, les tables secondaire 44P et tertiaire 46P étant utilisées seulement en mode dégradé de fonctionnement PDL ;
- présence du deuxième fichier additionnel de configuration 60, mais pas des premier et troisième fichiers additionnels de configuration 26, 62 : la ou les tables contournées sont la table secondaire 44O initiale associée au mode opérationnel OPS et/ou une ou plusieurs tables tertiaires système 46SO pour lesquelles une nouvelle version est présente dans le deuxième fichier additionnel de configuration 60 ;
- présence du troisième fichier additionnel de configuration 62, mais pas des premier et deuxième fichiers additionnels de configuration 26, 60 : la ou les tables contournées sont une ou plusieurs tables tertiaires applicatives 46AO pour lesquelles une nouvelle version est présente dans le troisième fichier additionnel de configuration 62 ;
- présence des premier et deuxième fichiers additionnels de configuration 26, 60, mais pas du troisième fichier additionnel de configuration 62, avec alors contournement comme décrit précédemment des tables pour lesquelles une nouvelle version est présente dans ces fichiers additionnels de configuration 26, 60 ;
- présence des deuxième et troisième fichiers additionnels de configuration 60, 62, mais pas du premier fichier additionnel de configuration 26, avec alors contournement comme décrit précédemment des tables pour lesquelles une nouvelle version est présente dans ces fichiers additionnels de configuration 60, 62 ;
- présence de tous les fichiers additionnels de configuration, c'est-à-dire des premier, deuxième et troisième fichiers additionnels de configuration 26, 60, 62, avec contournement comme décrit précédemment des tables pour lesquelles une nouvelle version est présente dans ces fichiers additionnels de configuration 26, 60, 62.

La séquence de démarrage du système avionique 10 selon l'invention va être à présent expliquée au regard de l'organigramme de la figure 8.

À la mise sous tension du système avionique 10, et donc de la plateforme informatique 15 contenue dans celui-ci, l'automate de démarrage 24 est exécuté en premier par le processeur 32, comme représenté par la flèche F1.

L'automate de démarrage 24 commence alors par regarder si le premier fichier additionnel de configuration 26 est présent dans la mémoire de stockage 36 à un emplacement prédéfini, prévu à cet effet, cette vérification de présence étant représentée par la flèche F2 à la figure 8.

Si le premier fichier additionnel de configuration 26 est présent à cet emplacement de la mémoire de stockage 36, l'automate de démarrage 24 vérifie avantageusement l'authenticité et l'intégrité du premier fichier additionnel de configuration 26, comme représenté par la flèche F3, et si cette vérification est positive, c'est-à-dire si le premier fichier additionnel de configuration 26 est à la fois authentique et intègre, l'automate de démarrage 24 recopiera alors dans la mémoire vive 35 chaque table contenue dans le premier fichier additionnel de configuration 26.

Si lors de la vérification de présence effectuée précédemment selon la flèche F2 l'automate de démarrage 24 a déterminé qu'aucun fichier additionnel de configuration 26 n'était présent dans la mémoire de stockage 36, ou encore qu'un fichier était présent mais sans table, alors l'automate de démarrage 24 lance le paquet d'amorçage 22, comme représenté par la flèche F4, et va alors en particulier utiliser les tables de configuration que le paquet d'amorçage 22 contient.

L'automate de démarrage 24 recopie ensuite en mémoire vive 35, comme représenté par la flèche F5, la ou les tables résultant des vérifications effectuées précédemment selon les flèches F2 et F3. Autrement dit, l'automate de démarrage recopie en mémoire vive 35 chaque table contenue dans le premier fichier additionnel de configuration 26, si ce dernier est déterminé comme présent lors de la vérification selon la flèche F2, puis avantageusement comme authentique et intègre lors de la vérification selon la flèche F3. Sinon, ce sont la ou les tables de configuration que contient le paquet d'amorçage 22 qui sont recopiées en mémoire vive 35.

Après cette recopie en mémoire vive 35 des tables de configuration, l'automate de démarrage 24 exécute un programme d'initialisation contenu dans le système d'exploitation 20, comme représenté par la flèche F6, et ce dernier va commencer par lire la ou les tables de configuration précédemment recopiées en mémoire vive 35, comme représenté par la flèche F7. La séquence de démarrage du système avionique 10 selon l'invention est alors achevée.

La séquence de démarrage décrite ci-dessus concerne le cas avec présence du premier fichier additionnel de configuration 26, mais pas des deuxième et troisième fichiers additionnels de configuration 60, 62, et l'homme du métier comprendra que la séquence de démarrage est similaire en cas de présence des deuxième 60 et/ou troisième 62 fichiers additionnels de configuration, l'automate de démarrage 24 se chargeant également de vérifier la présence des deuxième 60 et/ou troisième 62 fichiers additionnels de configuration aux emplacements prédéfinis, prévus à cet effet ; puis avantageusement de vérifier leur authenticité et/ou intégrité ; et enfin de recopier en mémoire vive les tables contenues dans ces fichiers additionnels si la ou les vérifications précitées sont positives.

L'homme du métier comprendra également que, dans un cas respectif à plusieurs fichiers additionnels de configuration, les vérifications sont effectuées dans l'ordre croissant de leurs dénominations, c'est-à-dire par exemple d'abord pour le premier fichier additionnel de configuration 26, puis pour le deuxième fichier additionnel de configuration 60 et enfin pour le troisième fichier additionnel de configuration 62, ceci dans le cas avec tous les fichiers additionnels de configuration.

Ainsi, le ou les fichiers additionnels de configuration 26, 60, 62 incluant au moins une table de configuration de ressources facilitent la prise en compte d'évolutions de contexte d'exécution de la ou des applications logicielles 50 en permettant l'ajout de nouvelles valeurs de configuration après la conception de ladite ou desdites applications logicielles 50.

Ce ou ces fichiers additionnels de configuration 26, 60, 62 permettent notamment de conserver le bénéfice de la certification effectuée, et d'éviter alors une nouvelle certification, ou recertification, et ainsi de réduire significativement les vérifications et tests techniques nécessaires.

En outre, chaque fichier additionnel de configuration 26, 60, 62 constitué de l'au moins une table de configuration est plus facile à générer et plus rapide à charger qu'une nouvelle version du paquet d'amorçage 22 qui serait modifié pour y introduire les nouvelles valeurs de configuration. Cela permet alors d'améliorer la performance, notamment en termes d'exécution et de temps de calcul, du système électronique avionique 10 selon l'invention

Le système électronique avionique 10 selon l'invention permet alors de faciliter la prise en compte d'évolutions de contexte d'exécution des applications logicielles avioniques 50, tout en réduisant significativement les vérifications et tests techniques résultant de ces évolutions et en ayant une performance système améliorée lors de cette prise en compte.

## Revendications

1. Plateforme informatique (15) destinée à être embarquée à bord d'un aéronef (5) et apte à exécuter un ensemble de partition(s) applicative(s) (12), la plateforme (15) hébergeant un système d'exploitation (20) et comportant des ressources (18) dont des ressources matérielles incluant un processeur (32), une mémoire vive (35) et une mémoire de stockage (36) ;
la plateforme informatique (15) comportant en outre dans la mémoire de stockage (36) :
+ un paquet d'amorçage (22) incluant un noyau, au moins un pilote de ressources, un ensemble de partition(s) système (30) et au moins une table de configuration de ressources (42, 44P, 46P), chaque partition système (30) incluant au moins un service (29) du système d'exploitation (20), la ou chaque table étant choisie parmi le groupe consistant en : une table (42) d'un premier type (HWCT) contenant des valeurs de configuration des ressources matérielles, une table (44P) d'un deuxième type (MGCT) contenant des valeurs de configuration de ressources utilisables par un ensemble respectif de partition(s), une table (46P) d'un troisième type (HACT) contenant des valeurs de configuration de ressources utilisées par une partition respective, les premier (HWCT), deuxième (MGCT) et troisième (HACT) types étant distincts les uns des autres, l'une (42) de l'au moins une table étant du premier type (HWCT) ; et
+ un automate de démarrage (24) apte à être exécuté en premier suite à une mise sous tension de la plateforme (15) et configuré pour lancer le paquet d'amorçage (22) ;
**caractérisée en ce que** l'automate de démarrage (24) est configuré pour vérifier si un fichier additionnel de configuration (26) est présent dans la mémoire de stockage (36), et pour lancer alors le fichier additionnel de configuration (26) avant le paquet d'amorçage (22),
le fichier additionnel de configuration (26) incluant au moins une table de configuration de ressources d'un type choisi parmi les premier (HWCT), deuxième (MGCT) et troisième (HACT) types ; chaque table du fichier additionnel de configuration (26) étant alors utilisée à la place d'une table respective de même type parmi l'au moins une table du paquet d'amorçage (22).

2. Plateforme (15) selon la revendication 1, dans laquelle si lors de la vérification de la présence dudit fichier additionnel de configuration (26), la mémoire de stockage (36) ne contient pas de fichier additionnel de configuration (26), alors l'automate de démarrage (24) est configuré pour lancer le paquet d'amorçage (22).

3. Plateforme (15) selon la revendication 1 ou 2, dans laquelle l'automate de démarrage (24) est configuré pour lancer le fichier additionnel de configuration (26) seulement si au moins une condition de lancement est remplie, chaque condition de lancement étant choisie parmi le groupe consistant en : une vérification d'authenticité du fichier additionnel de configuration (26), et une vérification d'intégrité du fichier additionnel de configuration (26) ;
l'automate de démarrage (24) étant de préférence configuré pour lancer le fichier additionnel de configuration (26) seulement si toutes les conditions de lancement sont remplies parmi la vérification d'authenticité du fichier additionnel de configuration (26) et la vérification d'intégrité du fichier additionnel de configuration (26).

4. Plateforme (15) selon l'une quelconque des revendications précédentes, dans laquelle la plateforme informatique (15) est apte à fonctionner suivant un mode de fonctionnement choisi au moins parmi un mode dégradé (PDL) où seul l'ensemble de partition(s) système (30) est exécutable parmi les ensembles de partition(s) système (30) et de partition(s) applicative(s) (12), et un mode opérationnel (OPS) où les ensembles de partition(s) système (30) et de partition(s) applicative(s) (12) sont chacun exécutables.

5. Plateforme (15) selon la revendication 4, dans laquelle au moins l'un parmi le paquet d'amorçage (22) et le fichier additionnel de configuration (26) contient une table (44P) de configuration de ressources du deuxième type (MGCT) pour le mode dégradé (PDL), la table de deuxième type pour le mode dégradé (44P) contenant des valeurs de configuration de ressources utilisables par l'ensemble de partition(s) système (30).

6. Plateforme (15) selon la revendication 4 ou 5, dans laquelle au moins l'un parmi le paquet d'amorçage (22) et le fichier additionnel de configuration (26) contient au moins une table (46P) de configuration de ressources du troisième type (HACT) pour le mode dégradé (PDL), chaque table de troisième type associée à une partition système (30) respective pour le mode dégradé (46P) contenant les valeurs de configuration des ressources utilisées par ladite partition système (30) en mode dégradé (PDL).

7. Plateforme (15) selon l'une quelconque des revendications précédentes, dans laquelle le paquet d'amorçage (22) et le fichier additionnel de configuration (26) incluent chacun au plus une table de configuration du premier type (HWCT).

8. Plateforme (15) selon l'une quelconque des revendications précédentes, dans laquelle si le fichier additionnel de configuration (26) inclut une table de configuration du premier type (HWCT), alors les valeurs de configuration de ressources matérielles contenues dans ladite table appartiennent chacune à des plages de valeur pour lesquelles la plateforme informatique (15) a été préalablement certifiée.

9. Plateforme (15) selon l'une quelconque des revendications précédentes, dans laquelle le paquet d'amorçage (22) et/ou le fichier additionnel de configuration (26) incluent plusieurs tables de configuration du deuxième type (MGCT) et/ou plusieurs tables de configuration du troisième type (HACT).

10. Système électronique avionique (10) destiné à être embarqué à bord d'un aéronef (5), le système avionique (10) comprenant :
- une plateforme informatique (15) apte à exécuter un ensemble de partition(s) applicative(s) (12), la plateforme informatique (15) étant selon l'une quelconque des revendications précédentes ;
- une table secondaire de configuration de ressources (44O), la table secondaire (44O) étant du deuxième type (MGCT), stockée dans la mémoire de stockage (36), et contenant des valeurs de configuration de ressources utilisables par l'ensemble de partition(s) applicative(s) (12) ; et
- l'ensemble de partition(s) applicative(s) (12), chaque partition applicative (12) incluant une application logicielle avionique (50) et une table tertiaire de configuration de ressources (46AO), chaque table tertiaire (46AO) étant du troisième type (HACT) et contenant des valeurs de configuration des ressources utilisées par la partition applicative (12) respective, l'ensemble de partition(s) applicative(s) (12) étant stocké dans la mémoire de stockage (36).

11. Système avionique (10) selon la revendication 10, dans lequel le système avionique (10) comprend, dans la mémoire de stockage (36), au moins un fichier additionnel de configuration (26, 60, 62) ;
le système avionique (10) comprenant de préférence plusieurs fichiers additionnels de configuration (26, 60, 62) ;
tel que le fichier additionnel de configuration (26) incluant au moins une table de configuration dont une de premier type (HWCT) ; et au moins un autre fichier additionnel de configuration (60, 62) incluant au moins une table de configuration d'un type choisi parmi les deuxième (MGCT) et troisième (HACT) types.

12. Système avionique (10) selon la revendication 10 ou 11, dans lequel le ou chaque fichier additionnel de configuration (26, 60, 62) inclut seulement l'au moins une table de configuration d'un type choisi parmi les premier (HWCT), deuxième (MGCT) et troisième (HACT) types ;
le ou chaque fichier additionnel de configuration (26, 60, 62) étant de préférence constitué de l'au moins une table de configuration d'un type choisi parmi les premier (HWCT), deuxième (MGCT) et troisième (HACT) types.

## Patentansprüche

1. Rechnerplattform (15), die dazu bestimmt ist, an Bord eines Luftfahrzeugs (5) zu sein, und die in der Lage ist, einen Satz von Anwendungspartition(en) (12) auszuführen, wobei die Plattform (15) ein Betriebssystem (20) beherbergt und Ressourcen (18) umfasst, darunter Hardware-Ressourcen, die einen Prozessor (32), einen Arbeitsspeicher (35) und einen Speicher (36) beinhalten;
die Rechnerplattform (15) ferner umfassend in dem Speicher (36):
+ ein Boot-Paket (22), das einen Kernel, mindestens einen Ressourcentreiber, einen Satz von Systempartition(en) (30) und mindestens eine Ressourcenkonfigurationstabelle (42, 44P, 46P) beinhaltet, wobei jede Systempartition (30) mindestens einen Dienst (29) des Betriebssystems (20) beinhaltet, wobei die oder jede Tabelle ausgewählt ist aus der Gruppe, bestehend aus: eine Tabelle (42) eines ersten Typs (HWCT), die Konfigurationswerte für die Hardware-Ressourcen enthält, eine Tabelle (44P) eines zweiten Typs (MGCT), die Konfigurationswerte für Ressourcen enthält, die von einem jeweiligen Satz von Partition(en) genutzt werden können, eine Tabelle (46P) eines dritten Typs (HACT), die Konfigurationswerte für Ressourcen enthält, die von einer jeweiligen Partition verwendet werden, wobei der erste (HWCT), der zweite (MGCT) und der dritte (HACT) Typ voneinander verschieden sind, wobei eine (42) der mindestens einen Tabelle von dem ersten Typ (HWCT) ist; und
+ einen Startautomaten (24), der geeignet ist, um nach dem Einschalten der Plattform (15) als erstes ausgeführt zu werden, und der konfiguriert ist, um das Boot-Paket (22) startet;
**dadurch gekennzeichnet, dass** der Startautomat (24) konfiguriert ist, um zu prüfen, ob eine zusätzliche Konfigurationsdatei (26) in dem Speicher (36) vorhanden ist, und dann die zusätzliche Konfigurationsdatei (26) vor dem Boot-Paket (22) zu starten,
wobei die zusätzliche Konfigurationsdatei (26) mindestens eine Ressourcenkonfigurationstabelle eines Typs beinhaltet, der ausgewählt ist aus dem ersten (HWCT), dem zweiten (MGCT) und dem dritten (HACT) Typ; wobei jede Tabelle der zusätzlichen Konfigurationsdatei (26) dann anstelle einer entsprechenden Tabelle desselben Typs von der mindestens einen Tabelle des Boot-Pakets (22) verwendet wird.

2. Plattform (15) nach Anspruch 1, wobei, wenn bei der Prüfung auf das Vorhandensein der zusätzlichen Konfigurationsdatei (26) der Speicher (36) keine zusätzliche Konfigurationsdatei (26) enthält, dann der Startautomat (24) konfiguriert ist, um das Boot-Paket (22) zu starten.

3. Plattform (15) nach Anspruch 1 oder 2, wobei der Startautomat (24) konfiguriert ist, um die zusätzliche Konfigurationsdatei (26) nur dann zu starten, wenn mindestens eine Startbedingung erfüllt ist, wobei jede Startbedingung ausgewählt ist aus der Gruppe, bestehend aus: eine Prüfung der Authentizität der zusätzlichen Konfigurationsdatei (26), und eine Prüfung der Integrität der zusätzlichen Konfigurationsdatei (26);
wobei der Startautomat (24) vorzugsweise konfiguriert ist, um die zusätzliche Konfigurationsdatei (26) nur dann zu starten, wenn alle der Startbedingungen aus der Authentizitätsprüfung der zusätzlichen Konfigurationsdatei (26) und der Integritätsprüfung der zusätzlichen Konfigurationsdatei (26) erfüllt sind.

4. Plattform (15) nach einem der vorherigen Ansprüche, wobei die Rechnerplattform (15) in der Lage ist, in einem Betriebsmodus betrieben zu werden, der ausgewählt ist zumindest aus einem herabgestuften Modus (PDL), in dem nur der Satz der Systempartition(en) (30) von den Sätzen der Systempartition(en) (30) und der Anwendungspartition(en) (12) ausführbar ist, und einem Betriebsmodus (OPS), in dem die Sätze der Systempartition(en) (30) und der Anwendungspartition(en) (12) jeweils ausführbar sind.

5. Plattform (15) nach Anspruch 4, wobei mindestens eines von dem Boot-Paket (22) und der zusätzlichen Konfigurationsdatei (26) eine Tabelle (44P) zur Konfiguration von Ressourcen des zweiten Typs (MGCT) für den herabgestuften Modus (PDL) enthält, die Tabelle des zweiten Typs für den herabgestuften Modus (44P), die Konfigurationswerte für Ressourcen enthält, die von dem Satz von Systempartition(en) (30) genutzt werden können.

6. Plattform (15) nach Anspruch 4 oder 5, wobei mindestens eines von dem Boot-Paket (22) und der zusätzlichen Konfigurationsdatei (26) mindestens eine Tabelle (46P) zur Konfiguration von Ressourcen des dritten Typs (HACT) für den herabgestuften Modus (PDL) enthält, jede Tabelle des dritten Typs, die mit einer jeweiligen Systempartition (30) für den herabgestuften Modus (46P) assoziiert ist, Konfigurationswerte der Ressourcen enthält, die von der Systempartition (30) in dem herabgestuften Modus (PDL) verwendet werden.

7. Plattform (15) nach einem der vorherigen Ansprüche, wobei das Boot-Paket (22) und die zusätzliche Konfigurationsdatei (26) jeweils höchstens eine Konfigurationstabelle des ersten Typs (HWCT) beinhalten.

8. Plattform (15) nach einem der vorherigen Ansprüche, wobei, wenn die zusätzliche Konfigurationsdatei (26) eine Konfigurationstabelle des ersten Typs (HWCT) beinhaltet, dann die Konfigurationswerte für Hardware-Ressourcen, die in der Tabelle enthalten sind, jeweils zu Wertebereichen gehören, für die die Rechnerplattform (15) zuvor zertifiziert worden ist.

9. Plattform (15) nach einem der vorherigen Ansprüche, wobei das Boot-Paket (22) und/oder die zusätzliche Konfigurationsdatei (26) mehrere Konfigurationstabellen des zweiten Typs (MGCT) und/oder mehrere Konfigurationstabellen des dritten Typs (HACT) beinhaltet.

10. Elektronisches Avioniksystem (10), das dazu bestimmt ist, an Bord eines Luftfahrzeugs (5) zu sein, das Avioniksystem (10) umfassend:
- eine Rechnerplattform (15), die geeignet ist, um eine Menge von Anwendungspartition(en) (12) auszuführen, wobei die Rechnerplattform (15) nach einem der vorherigen Ansprüche ist;
- eine sekundäre Ressourcenkonfigurationstabelle (44O), wobei die sekundäre Tabelle (44O) von dem zweiten Typ (MGCT) ist, die in dem Speicher (36) gespeichert ist und Ressourcenkonfigurationswerte enthält, die von dem Satz von Anwendungspartition(en) (12) verwendet werden können; und
- den Satz von Anwendungspartition(en) (12), wobei jede Anwendungspartition (12) eine Avionik-Softwareanwendung (50) und eine tertiäre Ressourcenkonfigurationstabelle (46AO) beinhaltet, jede tertiäre Tabelle (46AO) von dem dritten Typ (HACT) ist und Konfigurationswerte der von der jeweiligen Anwendungspartition (12) verwendeten Ressourcen enthält, wobei der Satz von Anwendungspartition(en) (12) in dem Speicher (36) gespeichert ist.

11. Avioniksystem (10) nach Anspruch 10, wobei das Avioniksystem (10) in dem Speicherspeicher (36) mindestens eine zusätzliche Konfigurationsdatei (26, 60, 62) umfasst;
das Avioniksystem (10) vorzugsweise mehrere zusätzliche Konfigurationsdateien (26, 60, 62) umfasst;
wie beispielsweise die zusätzliche Konfigurationsdatei (26), die mindestens eine Konfigurationstabelle beinhaltet, darunter eine des ersten Typs (HWCT); und mindestens eine weitere zusätzliche Konfigurationsdatei (60, 62), die mindestens eine Konfigurationstabelle eines Typs enthält, der ausgewählt ist aus dem zweiten (MGCT) und dem dritten (HACT) Typ.

12. Avioniksystem (10) nach Anspruch 10 oder 11, wobei die oder jede zusätzliche Konfigurationsdatei (26, 60, 62) nur die mindestens eine Konfigurationstabelle eines Typs enthält, der ausgewählt ist aus dem ersten (HWCT), dem zweiten (MGCT) und dem dritten (HACT) Typ;
wobei die oder jede zusätzliche Konfigurationsdatei (26, 60, 62) vorzugsweise aus der mindestens einen Konfigurationstabelle eines Typs besteht, der ausgewählt ist aus dem ersten (HWCT), dem zweiten (MGCT) und dem dritten (HACT) Typ.

## Claims

1. A computer platform (15) intended to be on board an aircraft (5) and able to execute a set of application partitions (12), the platform (15) hosting an operating system (20) and including resources (18) of which, hardware resources including a processor (32), random access memory (RAM) (35) and storage memory (36);
the computer platform (15) further including in the storage memory (36):
+ a boot package (22) including a kernel, at least one resource driver, a set of system partitions (30) and at least one resource configuration table (42, 44P, 46P), each system partition (30) including at least one service (29) of the operating system (20), the or each table being selected from among the group consisting of : a table (42) of a first type (HWCT) containing configuration values of hardware resources, a table (44P) of a second type (MGCT) containing resource configuration values usable by a respective set of partitions, a table (46P) of a third type (HACT) containing resource configuration values used by a respective partition, the first type (HWCT), second type (MGCT) and third type (HACT) being distinct from one another, one (42) of the at least one table being of the first type(HWCT); and
+ a boot controller (24) able to be executed first following power-up of the platform (15) and configured to launch the boot package (22);
**characterized in that** the boot controller (24) is configured to verify whether an additional configuration file (26) is present in the storage memory (36), and to then launch the additional configuration file (26) before the boot package (22),
the additional configuration file (26) including at least one resource configuration table of a type selected from the first type (HWCT), second type (MGCT) and third type (HACT); each table of the additional configuration file (26) then being used in place of a respective table of the same type from among the at least one table of the boot package (22).

2. The platform (15) according to claim 1, wherein if during verification for the presence of said additional configuration file (26), the storage memory (36) does not contain an additional configuration file (26), then the boot controller (24) is configured to launch the boot package (22).

3. The platform (15) according to claim 1 or 2, wherein the boot controller (24) is configured to launch the additional configuration file (26) only if at least one launch condition is met, each launch condition being selected from among the group consisting of: an authenticity verification of the additional configuration file (26), and an integrity verification of the additional configuration file (26);
the boot controller (24) preferably being configured to launch the additional configuration file (26) only if all the launch conditions are met from among the authenticity verification of the additional configuration file (26) and the integrity verification of the additional configuration file (26).

4. The platform (15) according to any one of the preceding claims, wherein the computer platform (15) is able to operate according to an operating mode selected at least from among a degraded mode (PDL) where only the set of system partitions (30) is executable from among the sets of system partitions (30) and application partitions (12), and an operational mode (OPS) where the sets of system partitions (30) and application partitions (12) are each executable.

5. The platform (15) according to claim 4, wherein at least one from among the boot package (22) and the additional configuration file (26) contains a configuration table (44P) of the second type for the degraded mode (PDL), the second type table for the degraded mode (44P) containing resource configuration values usable by the set of system partitions (30).

6. The platform (15) according to claim 4 or 5, wherein at least one from among the boot package (22) and the additional configuration file (26) contains at least one third-type resource configuration (HACT) table (46P) for degraded mode (PDL), each third-type table related to a respective system partition (30) for degraded mode (46P) containing the configuration values of the resources used by said system partition (30) in degraded mode (PDL).

7. The platform (15) according to any of the preceding claims, wherein the boot package (22) and the additional configuration file (26) each include at most one configuration table of the first type (HWCT).

8. The platform (15) according to any one of the preceding claims, wherein if the additional configuration file (26) includes a configuration table of the first type (HWCT), then the hardware resource configuration values contained in said table each belong to value ranges for which the computer platform (15) has been previously certified.

9. The platform (15) according to any of the preceding claims, wherein the boot package (22) and/or the additional configuration file (26) include several configuration tables of the second type (MGCT) and/or several configuration tables of the third type (HACT).

10. An electronic avionics system (10) intended to be on board an aircraft (5), the avionics system (10) comprising:
- a computer platform (15) able to execute a set of application partitions (12), the computer platform (15) being, according to any one of the preceding claims;
- a secondary resource configuration table (44O), the secondary table (44O) being of the second type (MGCT), stored in the storage memory (36), and containing resource configuration values usable by the set of application partition(s) (12); and
- the set of application partition(s) (12), each application partition (12) including an avionics software application (50) and a tertiary resource configuration table (46AO), each tertiary table (46AO) being of the third type (HACT) and containing configuration values of the resources used by the respective application partition (12), the set of application partitions (12) being stored in the storage memory (36).

11. The avionics system (10) according to claim 10, wherein the avionics system (10) comprises, in the storage memory (36), at least one additional configuration file (26, 60, 62);
the avionics system (10) preferably comprising several additional configuration files (26, 60, 62);
such that the additional configuration file (26) including at least one configuration table, one of which is of the first type (HWCT), and at least one other additional configuration file (60, 62) including at least one configuration table of a type selected from among the second type (MGCT) and third type (HACT).

12. The avionics system (10) according to claim 10 or 11, wherein the or each additional configuration file (26, 60, 62) includes only the at least one configuration table of a type selected from the first type (HWCT), second type (MGCT) and third type (HACT);
the or each additional configuration file (26, 60, 62) preferably consisting of the at least one configuration table of a type selected from the first type (HWCT), second type (MGCT) and third type (HACT).
